# EUROPEAN PATENT APPLICATION

(11) **EP 1 797 949 A1**
(43) Date of publication of application: **20.06.2007**
(21) Application number: 05112110.1
(22) Date of filing: 14.12.2005
(51) Int. Cl.: B01J 23/42, B01J 31/28, B01J 31/22, C08L 83/04, B01J 37/02, B01J 21/08, B01J 37/34

(54) **Pt-containing hydrosilylation catalyst, its preparation and use in the cross-linking of organosilicon compounds**

(71) Applicant: Akzo Nobel N.V., 6824 BM Arnhem (NL)
(72) Inventor: Vitulli, Giovanni, 56100 Pisa (IT); Evangelisti, Claudio, 56100 Pisa (IT); Ciardelli, Francesco, 56100 Pisa (IT); Salvadori, Piero, 56100 Pisa (IT); Rocchi, Fausto, 20017 Milan (IT)
(74) Representative: Schalkwijk, Pieter Cornelis

(57) **Abstract**

Process for the preparation of a Pt-containing hydrosilylation catalyst, comprising the steps of (a) condensing Pt-vapour in a mixture of an aromatic compound and a vinyl siloxane compound using metal vapour synthesis, resulting in the formation of a solid matrix, and (b) melting the solid matrix to obtain a Pt-containing solution. This solution is clear, colourless, and stable at room temperature.

## Description

The present invention relates to a process for the preparation of a Pt-containing hydrosilylation catalyst. It further relates to the catalyst obtainable by this process, and the use of this catalyst in the cross-linking of organosilicon compounds.

It is well-known in the art of organosilicon chemistry that Pt-compounds can be used to catalyse hydrosilylation reactions. Hydrosilylation involves the reaction of hydrosilanes to unsaturated bonds of, e.g., aliphatic compounds. This reaction is widely used industrially for the synthesis of organofunctional silanes and polysiloxanes, for the crosslinking of polymers, and for the manufacture of silicone-organic polymers.

GB 804 097 discloses the use of chloroplatinic acids as catalyst.
Platinum complexes of unsaturated siloxanes are disclosed in GB 1 127 675.

GB 2 252 771 discloses the preparation of a Pt-organosiloxane complex by reacting a platinous halide with an oganosiloxane having 2-4 silicon-bonded organic groups with 2-6 carbon atoms and terminal olefinic unsaturation, the remaining silicon-bonded organic substituents being selected from C₁₋₆ alkyl groups and phenyl groups, using a polar organic liquid which is at least a partial solvent for the platinous halide. Such polar organic liquids include amides, ketones, and crown ethers.
A disadvantage of the resulting catalyst is that, due to the presence of halogen, corrosion of the surroundings occurs.

The method disclosed in US 3,814,730 solves this problem by removing halogen through a base treatment, followed by recovering the Pt-siloxane complex from the resulting mixture, and removing undesired materials such as starting materials and by-products. A solvent, in the form of an alcohol or ether, is used to facilitate the contact between the platinum halide and the organosilicon material.
Unfortunately, however, during hydrosilylation this alcohol or ether causes undesirable secondary reactions such as the formation of alkoxy groups, reduction in catalytic activity, and reduction in storage stability.

A comparable catalyst containing reduced amounts of alcohol is disclosed in US 6,051,673. This catalyst comprises a platinum-divinyltetraorganosiloxane complex, divinyltetraorganosiloxane in an amount 2-1,000 times the number of Pt-atoms, and toluene or xylene. The composition contains less than 5 wt% of alcohol. The complex is prepared by heating chloroplatinic acid, divinyltetraorganosiloxane, and a basic inorganic metal salt in an alcohol solvent, subsequently adding toluene or xylene, and finally distilling out the alcohol. This process again requires removal of the halide. Furthermore, distillation of the alcohol is required.

A completely different way to obtain a Pt-containing hydrosilylation catalyst is disclosed by C. Polizzi et al., J. Organometall. Chem., 451 (1993) C4-C6. This catalyst is prepared by condensing Pt vapour in mesitylene, resulting in solvated Pt atoms. This catalyst is said to be successful in the hydrosilylation of 1-hexyne.
Unfortunately, however, this Pt/mesitylene solution is thermally unstable and has a brown colour. The use of such a brown composition as a catalyst may cause product discolouration, which is evidently undesired.

The object of the present invention is therefore to provide a process for the preparation of a Pt-containing hydrosilylation catalyst in the form of a clear, colourless solution which is stable at room temperature and does not require the use of halides or alcohols nor purification methods to remove halides or alcohols.

The process according to the present invention comprises the steps of:
a. condensing Pt-vapour in a mixture of an aromatic compound and a vinyl siloxane compound using metal vapour synthesis, resulting in the formation of a solid matrix, and
b. melting the solid matrix to obtain a Pt-containing solution.

The invention also relates to the hydrosilylation catalyst obtainable by this process.

In the first step of the process, Pt-vapour is condensed in a mixture of an aromatic compound and a vinyl siloxane compound using metal vapour synthesis (MVS). MVS is a generally known technique in which metal vapour - in this case: Pt-vapour - is co-condensed with an organic compound at liquid nitrogen temperature in a reactor. Pt-vapour can be generated in different ways, e.g. on a laboratory scale by electrically heating a tungsten wire surface coated with electrodeposited Pt, using glass reactors, or on a larger scale by electron beam heating using stainless steel reactors.
In the process according to the present invention, the organic compound is a mixture of an aromatic compound and a vinyl siloxane compound.

Examples of aromatic compounds that can be used in the process according to the invention are substituted arenes, such as mesitylene (1,3,5-trimethylbenzene), xylene, and toluene. The preferred aromatic compound is mesitylene.

Examples of vinyl siloxane compounds that can be used in the process according to the invention are divinyl tetramethyl disiloxane, tetravinyl dimethyl disiloxane, and tetravinyl tetramethyl cyclotetrasiloxane. The preferred vinyl siloxane compound is divinyl tetramethyl disiloxane.

The mixture containing an aromatic compound and a vinyl siloxane compound preferably contains at least 50 wt%, more preferably at least 60 wt%, and most preferably at least 75 wt% of the aromatic compound. The amount of organic compound in this mixture preferably is not more than 95 wt%, more preferably not more than 90 wt%, and most preferably not more than 85 wt%.
The vinyl siloxane compound preferably is present in the mixture in an amount of at least 5 wt%, more preferably at least 10 wt%, and most preferably at least 15 wt%. The amount of vinyl siloxane compound in this mixture preferably is not more than 50 wt%, more preferably not more than 40 wt%, and most preferably not more than 25 wt%, all weight percentages being based on the total weight of said mixture.

The mixture containing an aromatic compound and a vinyl siloxane compound may further contain additional Pt-stabilising ligands such as acetone, THF, and CH₃CN.

The amount of platinum condensed in the mixture preferably is at least 0.05 wt%, more preferably at least 0.1 wt%; it is preferably not more than 5 wt%, more preferably not more than 3 wt%, and most preferably not more than 2 wt%, based on the total weight of the resulting solid matrix.

According to the second step of the process of the invention, the solid matrix formed in step a) is melted. Melting can be performed by simply stopping cooling with liquid nitrogen, so that the solid matrix is allowed to reach its melting point.
The resulting solution is preferably stored at a temperature of at least -5°C, more preferably at least 0°C, and most preferably at least 10°C. The storage temperature preferably is not more than 30°C, more preferably not more than 25°C.

The process does not require any purification or separation steps to remove undesired side products.

In a further embodiment, the catalyst may be supported on a carrier. Suitable carriers include silica, alumina, activated carbon, graphite, and other conventional catalyst carriers. Silica is a preferred carrier for the hydrosilylation catalyst of the present invention. Such supported catalysts may be prepared by adding the Pt-containing solution to the carrier, either by wet impregnation or by incipient wetness impregnation. In the case of wet impregnation, it may be desired to suspend the carrier in a hydrocarbon solvent before adding the Pt-containing solution. The supported catalyst is finally dried, preferably at around room temperature and reduced pressure.
The supported catalyst preferably contains at least 0.01 wt% Pt, more preferably at least 0.05 wt% Pt, based on the total weight of catalyst. It preferably contains not more than 5 wt% Pt, more preferably not more than 1 wt% Pt, and most preferably not more than 0.1 wt% Pt, based on the total weight of the supported catalyst.

The catalyst obtainable by the process of the present invention is particularly useful in hydrosilylation reactions used for the formation of silicon networks. Such hydrosilylation reactions involve the reaction between (a) an organosilicon compound having a silicon hydride group and (b) an unsaturated compound. The catalyst according to the invention can be used in these reactions in the same way conventional Pt-catalysts are used. The catalyst may be used in the form of the Pt-containing solution, but also in the form of a supported catalyst. The catalyst is preferably used in amounts of between 5 and 30 ppm, calculated as Pt and based on the total weight of the reaction mixture.

Hydrosilylation reactions are generally conducted at room temperature or slightly above and require from a few minutes up to a few hours of reaction time, depending on the nature of the organosilicon compound and the unsaturated compound used.
Suitable organosilicon compounds include silanes, siloxanes, and other silicon-containing polymers. Examples are HSiCl₃, CH₃SiHCl₂, HSi(OC₂H₅)₃, C₆H₅SiHCl₂, C₆H₅SiHCH₃Br, (CH₃)₂SiHCl, C₂H₅SiH₂Cl, CH₃SiH(OCH₃)₂, methylhydrogen polysiloxanes, and copolymers of methylhydrogensiloxane units and, e.g., dimethylsiloxane units, trimethylsiloxane units, or phenylsiloxane units.
Suitable unsaturated compounds include 1-pentene, 1-hexene, 1-heptene, acetylene, butadiene, vinylacetylene, cyclohexene, styrene, allylbromide, vinylacetate, allyl alcohol, an allyl ether of a poly(alkylene oxide), and organosilicon compounds like (CH₃)₂(CH₂=CH)SiCl, (CH₂=CHCH₂)(CH₃)SiBr, (CH₂=CH)Si(C₂H₅)₂Cl, (CH₂=CH)Si(OCH₃)₃, and organosiloxanes and polysiloxanes containing silicon-bonded vinyl, allyl, or hexenyl radicals.

### EXAMPLES

### Comparative Example 1A

Platinum vapour, generated by resistive heating of a tungsten surface coated with 100-150 mg of electrodeposited platinum, was co-condensed with mesitylene (40 ml) at liquid nitrogen temperature in a glass reactor chamber in about 40 min. The reactor chamber temperature was raised to the melting point of the solid matrix (about -40 °C) and the resulting brown solution was siphoned off at low temperature in a Schlenk tube and kept in a refrigerator at -30°C. The content of the metal solution, evaluated by atomic absorption analysis, was 1.2 mg Pt/ml.

### Comparative Example 1B

Platinum (2.5 grams) vapour, generated by electron beam heating with an evaporation rate of 1-5- 1.7 KW and an average pressure of 10⁻⁵ Torr, was co-condensed with mesitylene (2,000 ml) at liquid nitrogen temperature in a stainless steel reactor chamber in a 1.5 hour run.
The temperature was raised to the melting point of the solid matrix (c. -40°C), resulting in the formation of a brown solution containing about 1.2 mg/ml Pt, as estimated by atomic adsorption analysis. This solution turned out to be stable under argon atmosphere at -30°C for several days - which means that no Pt precipitation was observed. At room temperature, however, Pt precipitation was observed after few hours, meaning that the solution was unstable at room temperature.

### Comparative Examples 2A and 2B

Catalysts were prepared according to Comparative Examples 1A and 1 B, except that divinyl tetramethyl disiloxane was added to the brown solution at -30°C and in amounts of 5 and 250 ml, respectively. The solutions turned out to be stable at room temperature, but remained brown.

### Examples 3A and 3B

Catalysts were prepared according to Comparative Examples 1A and 1 B, except that platinum vapour was co-condensed in respective mixtures of 40 ml mesitylene and 5 ml divinyl tetramethyl disiloxane (Example 3A) and 1,700 ml mesitylene and 200 ml divinyl tetramethyl disiloxane (Example 3B). After melting, clear, colourless solutions containing 1.2 mg/ml Pt were obtained. These solutions were stable at room temperature for several months without a change in colour and without formation of Pt metal.

### Comparative Examples 4A and 4B

Catalysts were prepared according to Comparative Examples 1A and 1 B, except that divinyl tetramethyl disiloxane was substituted for the mesitylene. Although the solutions were initially clear, they were very unstable at room temperature, with almost complete formation of Pt metal.

### Example 5

A catalyst was prepared according to Example 3A, except that the resulting Pt concentration of the solution was 0.75 mg/ml. 14 ml of this solution was added to a suspension of 10.0 g functionalised silica in 40 ml n-pentane and the resulting mixture was stirred for 6 hours at room temperature. The liquid phase was removed and the remaining solid was dried at room temperature under reduced pressure (10⁻² Torr). The resulting catalyst contained 0.1 wt% Pt supported on silica.

### Example 6

Example 5 was repeated, except that 7 ml of the Pt-containing solution was used. The resulting silica-supported catalyst contained 0.05 wt% Pt.

### Example 7

The reactivity of the catalyst prepared in Example 3B in hydrosilylation was compared with that of a commercially available platinum cyclovinylmethyl siloxane complex containing 3-3.5% Pt in cyclic methylvinyls (SIP6832.0, ex-ABCR).

In separate polypropylene beakers two components (components A and B) were premixed to form a reactive liquid silicon resin system.
Component A was prepared by mixing the Pt-catalyst with a mixture of vinylsilane resin (DSM-V31) and 15% HMDZ-treated fumed silica (SIS6962.0 ex ABCR). The catalysts were used in amounts that resulted in the presence of either 24 ppm of Pt or 2.4 ppm Pt in the final mixture containing components A and B.
Component B was a mixture of 36 parts by weight of vinylsilane resin (DMS-V31) and 4 parts by weight of hydrosilane (HMS-301, ex-ABCR)

100 parts by weight of component A were mixed with 40 parts by weight of component B and a sample of that mixture was placed in a Rheometer MDR2000E (ex-Alpha Technology) to measure the curing properties at 90°C with a rotating angle of 0.5°. The results are shown in Table 1.
In this Table, *ts2* is the time elapsed from the start of the measurement until minimum viscosity + 0.22 Nm. It represents the safe processing time. *t90* is the time needed to achieve 90% of the total cross-linking. Delta S is the delta torque which is directly related to the cross-link density.

**Table 1**

| | Catalyst Example 3B | | Reference Catalyst | |
|---|---|---|---|---|
| Component A (pbw) | 100 | 100 | 100 | 100 |
| Pt (ppm) | 24 | 2.4 | 24 | 2.4 |
| Component B (pbw) | 40 | 40 | 40 | 40 |
| ts2 (min) | 0.39 | 1.02 | 0.57 | 1.30 |
| t90 (min) | 0.57 | 6.79 | 0.80 | 7.37 |
| delta S (Nm) | 0.61 | 0.55 | 0.63 | 0.58 |

Table 1 shows that the catalyst according to the present invention results in a faster cure and about the same cross-link density compared to the commercial reference catalyst.

### Example 8

Example 7 was repeated, except that the silica-supported catalyst of Example 5 was used instead of the catalyst of Example 3B. The results are shown in Table 2.

**Table 2**

| | Catalyst Example 5 | | Reference Catalyst | |
|---|---|---|---|---|
| Component A (pbw) | 100 | 100 | 100 | 100 |
| Pt (ppm) | 24 | 2.4 | 24 | 2.4 |
| Component B (pbw) | 40 | 40 | 40 | 40 |
| Ts2 (min) | 0.26 | 0.85 | 0.57 | 1.30 |
| t90 (min) | 0.61 | 7.19 | 0.80 | 7.37 |
| delta S (Nm) | 0.52 | 0.50 | 0.63 | 0.58 |

Table 2 shows that the supported catalyst according to the present invention results in a faster cure and a slightly lower cross-link density compared to the commercial reference catalyst.

### Comparative Example 9

Example 7 was repeated, except that as a reference catalyst, the catalyst of Comparative Example 2B was used. The results are shown in Table 4.

**Table 4**

| | Catalyst Example 3B | | Catalyst Comp. Example 2B | |
|---|---|---|---|---|
| Component A (pbw) | 100 | 100 | 100 | 100 |
| Pt (ppm) | 24 | 2.4 | 24 | 2.4 |
| Component B (pbw) | 40 | 40 | 40 | 40 |
| ts2 (min) | 0.39 | 1.02 | 0.32 | 7.62 |
| t90 (min) | 0.57 | 6.79 | 1.04 | 8.38 |
| delta S (Nm) | 0.61 | 0.55 | 0.60 | 0.24 |

Table 4 shows that the catalyst according to the present invention results in a faster cure and a higher cross-link density compared to the comparative catalyst.

## Claims

1. Process for the preparation of a Pt-containing hydrosilylation catalyst, comprising the steps of:
a. condensing Pt-vapour in a mixture of an aromatic compound and a vinyl siloxane compound using metal vapour synthesis, resulting in the formation of a solid matrix, and
b. melting the solid matrix to obtain a Pt-containing solution.

2. Process according to claim 1 wherein the aromatic compound is mesitylene.

3. Process according to claim 1 or 2 wherein the vinyl siloxane compound is divinyl tetramethyl siloxane.

4. Process according to any one of claims 1-3, followed by addition of the Pt-containing solution to a carrier, followed by drying.

5. Process according to claim 4 wherein the carrier is silica.

6. Hydrosilylation catalyst obtainable by the process of claims 1-5.

7. Use of the catalyst of claim 6 in the cross-linking of organosilicon compounds.
